(19)

Europäisches Patentamt
European Patent Office
Office européen des brevets

(11) **EP 2 779 540 A1**

(12) **EUROPEAN PATENT APPLICATION**

(43) Date of publication:
**17.09.2014 Bulletin 2014/38**

(51) Int Cl.:
**H04L 12/801** (2013.01)  **H04L 12/835** (2013.01)

(21) Application number: **14158384.9**

(22) Date of filing: **07.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.03.2013 US 201313803109**

(71) Applicant: **Raytheon BBN Technologies Corp.
Cambridge, MA 02138 (US)**

(72) Inventors:
• **Tetteh, William Nii
Cambridge, MA 02138 (US)**
• **Merlin, Christophe Jean-Claude
Malden, MA 02148 (US)**

(74) Representative: **Carpmaels & Ransford LLP
One Southampton Row
London WC1B 5HA (GB)**

(54) **Methods for dynamic transceiver resource allocation in multi-transceiver systems**

(57)     Embodiments of a system and method for managing transceiver resources in a wireless network are generally described herein. In some embodiments, a transceiver resource manager (MXRM) dynamically adapts the number of transceivers to an offered load. A node computes the number of transceiver it needs based on queue depth and queue usage. MXRM then shares the number of the transceivers to be requested, A, with next-hop neighbors. A node assigns X transceivers such that X is the maximum of their own A value and the highest A value they receive if they are next-hop targets. MXRM processes requests for additional transceivers from nodes and previous-hop neighbors such that the sender-receiver pair assigns a compatible number of transceivers. MXRM is also used to drive frequency assignments to increase capacity along the traffic flows. Therefore, MXRM adapts transceiver assignments to the traffic paths.

Fig. 6

EP 2 779 540 A1

## Description

GOVERNMENT RIGHTS

The government owns rights in the present invention pursuant to contract FA8750-11-C-0201, awarded by the Department of the Air Force.

BACKGROUND

Networks of the future will deliver voice and video streams to and from any confine of the network. In particular, multicast video traffic will stretch the network's throughput and delay capabilities and will rely on advanced management of concurrent transmissions to multiple targets. The goals set for multicast video streaming involve managing transmissions to targets on different frequencies or data rates, such as is common in frequency-hopping MACs (media access control) or other cognitive radios. More generally, new communication devices like cell phones include different communication interfaces such as Bluetooth, WiFi, Cellular 3G and 4G networks, GPS (global positioning system), etc.

Systems are built as a combination of the IEEE (Institute of Electrical and Electronic Engineers) 802.11 set of standards for implementing wireless local area network (WLAN) computer communication, the IEEE 802.15.4 standard specifies the physical layer and media access control for low-rate wireless personal area networks (LR-WPANs). The IEEE 802.15.1 standard defines the lower transport layers of the Bluetooth™ wireless technology for wireless personal area networks (WPANs), etc. Other standards in the 802.xx family of standards define other technologies such as ultra wideband, Bluetooth, mesh networks, bridging, mobile broadband wireless access, etc. However, the critical issues at the MAC layer involve addressing neighbor coverage by different interfaces, concurrent link usage, etc.

The multiplicity of transceivers and interfaces impose a high energy drain on devices. The additional energy expenditure usually yields higher throughput, but can turn wasteful when the network is underutilized, e.g., when voice or video streams are turned off. Conversely, for a transceiver that is put to sleep, the network's performance is preserved when the offered load increases and transceivers are brought up again.

Non-homogeneous transceivers that provide the different communication interfaces communicate with different neighbors at different costs and provide a unified layer of abstraction to use interfaces in an efficient manner. Cell phones, personal digital assistants (PDAs), radio systems, etc. may include multiple transceivers whose compounded energy consumption imposes a heavy drain on their batteries.

For example, in multi-transceiver systems, the transceivers may be assigned even if they are not used. This results in a waste of energy when a transceiver is powered but not used. Transceiver management has hitherto involved purely distributed decision making based on the amount of traffic sent and received: In a distributed decision making approach, a node computes the optimal number of transceivers to use based on traffic that a node sends and receives. This approach ignores contention where a node cannot send its offered load because the number of transceivers is not increased through the assignment of additional transceivers. Accordingly, receivers are prevented from helping a sending node by increasing the number of transceivers at a receiving node. Further, the distributed decision making approach ignores frequency assignments where a node has no other option than to send on one frequency out of two assigned transceivers because a third transceiver will not be requested.

BRIEF DESCRIPTION OF THE DRAWINGS

Fig. 1 illustrates a communication network having a plurality of data flows through a plurality of nodes;
Fig. 2 illustrates transmission limitations for a node;
Fig. 3 illustrates an exemplary implementation of a node according to an embodiment;
Figs. 4a illustrates a network of nodes demonstrating the use of transceiver activation resulting in frequency lockout of target nodes according to an embodiment;
Figs. 4b illustrates a network of nodes demonstrating the use of managed transceiver activation according to an embodiment to prevent frequency lockout of target nodes;
Fig. 5 illustrates the use of advertisement for requesting activation of additional transceivers according to an embodiment; and
Fig. 6 is a flowchart of a method for managing transceiver resources according to an embodiment.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass equivalents of those claims.

A multi-transceiver resource manager (MXRM) dynamically adapts the number of transceivers based on offered load. MXRM processes requests for additional transceivers from nodes and previous-hop neighbors such that the sender-receiver pair assigns a compatible number of transceivers. More specifically, MXRM considers the state of queues from nodes and their previous-hop neighbors to scale the number of transceivers up or down to adapt capacity to the load.

MXRM is a sender-based transceiver manager that operates on offered load, contention and neighbor input. A node computes the number of transceiver it needs based on queue depth and queue usage. MXRM then shares the number of the transceivers to be requested, A, with the next-hop neighbors. A node assigns X transceivers such that X is the maximum of their own A value and the highest A value they receive if they are next-hop targets. This last point allows nodes to activate more transceivers along data paths. A frequency assignment algorithm may thus take advantage of the additional activated transceivers to increase network connectivity. MXRM conserves energy by reducing the number of transceivers activated outside of the data path. MXRM is also used to drive frequency assignments to increase capacity along the traffic flows. Therefore, MXRM further adapts frequency assignments to the traffic paths.

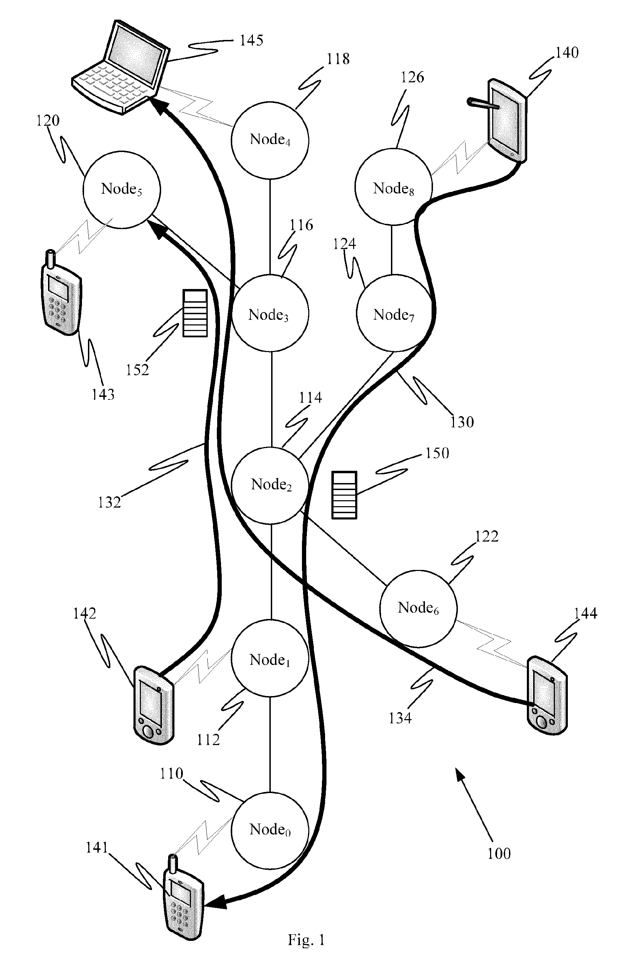

Fig. 1 illustrates a communication network 100 having a plurality of data flows through a plurality of nodes. In Fig. 1, nine nodes 110-126, i.e., $Node_0$-$Node_8$, are shown in the network 100. First data flow 130 flows from wireless device 140 through nodes 126, 124, 114, 112, 110 to wireless device 141. Second data flow 132 flows from wireless device 142 through nodes 112, 114, 116, 120 to wireless device 143. Third data flow 134 flows from wireless device 144 through nodes 122, 114, 116, 118 to wireless device 145. Because of the data or traffic load through $Node_2$ 114 and $Node_3$ 116, the queue depth for data queues 150, 152 may become greater than a selected threshold. In such an instance, an additional transceiver may need to be activated to adapt the number of transceivers to the offered load. A multi-transceiver resource manager (MXRM) considers the state of a queue for a node, e.g., $Node_3$ 116, and the previous-hop neighbor node, e.g., $Node_2$ 114, to scale the number of transceivers at $Node_3$ 116 up or down to adapt capacity to the load at $Node_3$ 116.

However, idle transceivers consume energy but do not help serve application traffic. Therefore, it helps to dynamically adapt the number of transceivers to the offered load. In applications where high throughput may be a higher priority than immediate energy savings, MXRM is more aggressive in waking-up or activating transceivers than turning them off. MXRM considers the number of packets sent and received for nodes within a moving window. If a node handles more packets, the node may decide to turn on additional transceivers and vice-versa.

Frequency assignment protocols complicate transceiver ramp-up in multicast traffic. For example, a node, such as $Node_3$ 116, may have two multicast targets, $Node_4$ 118 and $Node_5$ 120, and the targets may have two active transceivers, wherein a channel is assigned by all nodes to accelerate frequency assignment convergence and ensure connectivity. Nodes cannot assign the same frequency or there would only be as many channels as there are physical transceivers or interfaces on each node, which does not promote frequency diversity and space reuse. Thus, one of the target nodes may not be able to assign the frequencies used by $N_0$.

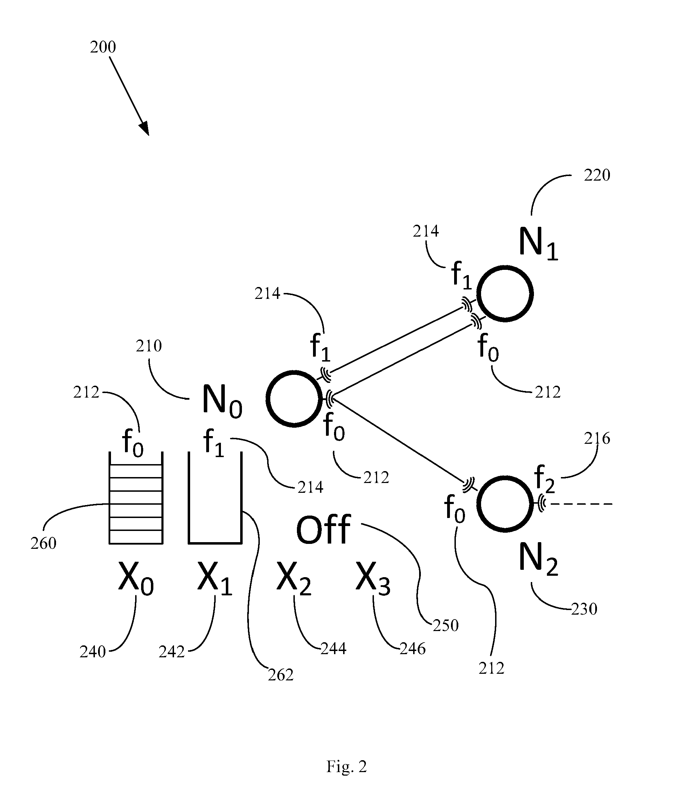

Fig. 2 illustrates transmission limitations for a node 200. In Fig. 2, $N_0$ 210 communicates with $N_1$ 220 and $N_2$ 230 on frequency $f_0$ 212. $N_0$ 210 and $N_1$ 220 also use frequency $f_1$ 214. $N_0$ 210 can send on one frequency, $f_0$ 212, because $N_2$ 230 did not assign frequency channel $f_1$ 214, but instead assigned frequency channel $f_2$ 216. As a consequence, $N_0$ 210 is sending as much traffic as is allowed by one transceiver $X_0$ 240, causing the three nodes, $N_0$ 210, $N_1$ 220, $N_2$ 230, to calculate that they need two transceivers, $X_0$ 240, $X_1$ 242, which $N_0$ 210 has assigned already. Transceivers $X_2$ 244, $X_3$ 246 have not been activated and are thus shown in an Off state 250. For nodes $N_1$ 220 and $N_2$ 230, two transceivers are represented by the use of frequencies $f_0$ 212 and $f_1$ 214 at $N_1$ 220 and frequencies $f_1$ 214 and $f_2$ 216 at $N_1$ 220. As more packets cannot be delivered, nodes, $N_0$ 210, $N_1$ 220, $N_2$ 230, do not ramp-up capacity.

More specifically, node $N_0$ 210 sends packets to two targets, $N_1$ 220, $N_2$ 230, with which it shares one and two frequencies, $f_0$ 212 and $f_1$ 214, respectively, due to common limitations in frequency assignment protocols. $N_0$ can send on $f_0$ to reach its targets $N_1$ 220, $N_2$ 230, although the queue 260 for transceiver $X_0$ 240 is at or near capacity and the queue 262 for $X_1$ 242 is .not near capacity. Thus, in traditional fully-distributed transceiver management approaches, nodes see no reason to wake-up additional transceivers because the flow of packets coming out of one transceiver is relatively light.

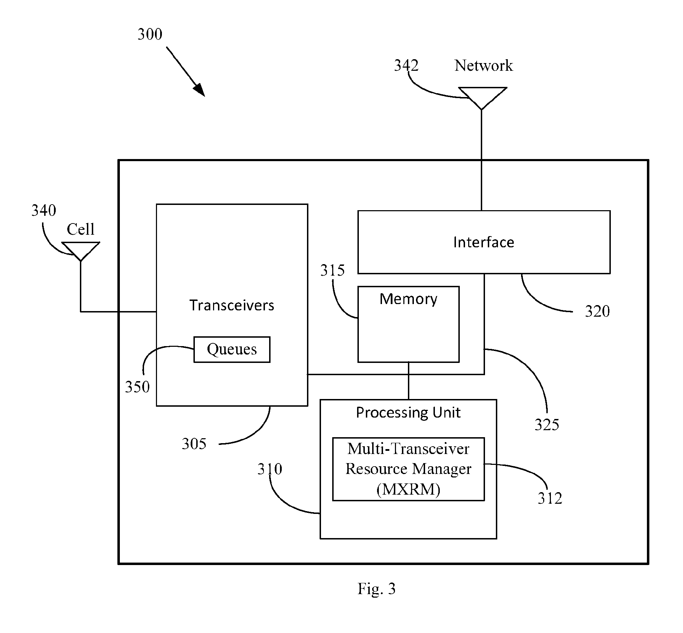

Fig. 3 illustrates an exemplary implementation of a node 300 according to an embodiment. Node 300 may be an Evolved Node B (eNodeB), base transceiver station (BTS), wireless access point (AP), router, etc. The node 300 may include a plurality of transceivers 305, a processing unit 310, a memory 315, an interface 320 and a bus 325. Transceivers 305 may include transceiver circuitry that may be activated for transmitting and/or receiving symbol sequences using radio frequency signals via one or more antennas 340, 342.

Processing unit 310 may include a processor, microprocessor, or processing logic that may interpret and execute instructions. Processing unit 310 may perform the device data processing functions and other functions of node 300. For example, by way of transceivers 305 node 300 may receive packets for processing and forwarding to subsequent nodes. Processing unit may also implement a multi-transceiver resource manager (MXRM) 312 according to an embodiment. Alternatively, MXRM 312 may be implemented in a stand-alone device or provided further upstream or downstream from any particular node. For example, the MXRM may be provided at a headend in an optical communications system, a mobile switching center in a 3G wireless network, a serving gateway and/or mobility management entity (MME) in a 4G wireless network, e.g., LTE (long term evolution), or other components of a packet-based communications infrastructure. Those skilled in the art will recognize from this description that embodiments are not meant to be confined or limited to the entities mentioned herein, but may depend on the technology implemented or other design decisions.

Memory 315 may provide permanent, semi-permanent, or temporary working storage of data and instructions for use by processing unit 310 in performing device processing functions. Memory 315 may include read only memory (ROM), random access memory (RAM), large-capacity storage devices, such as a magnetic and/or optical recording medium and its corresponding drive, and/or other types of memory devices. Interface 320 may include circuitry for interfacing with a link that connects to a network. Bus 325 may interconnect the various components of node 300 to permit the components to communicate with one another. However, the arrangement of components of device 300 illustrated in Fig. 3 is for illustrative purposes. Other arrangements with more, fewer, or a different arrangement of components, or the use of different or related standards may be implemented.

The MXRM 312 considers depths of queues 350 and explicitly shares requests for more transceivers. However, even if the MXRM 312 considers the depth of its own queues, this purely distributed decision-making may be inadequate because it ignores contention. For example, if node 300 cannot send more than a portion of its offered traffic load due to contention in its neighborhood, the depth of its queue 350 grows, but from the outside it looks as if it is sending very little traffic. Neighbors will see no reason to add new transceivers and the node 300 will not be able to create a new link to relieve its queues 350. Accordingly, processing unit 310 computes a number of transceivers to request and shares this number, (A), with neighboring nodes. MXRM 312 is a sender based transceiver management scheme that provides a node with the optimal number of transceivers to accommodate the network traffic. The decisions made by MXRM have important consequences for frequency assignment in terms of matching the routing tree to data flows and convergence time.

To estimate load, the MXRM 312 compares the depth, $D$, of the aggregate queue 350 of all queue depths $d_x$ for transceiver $x$ to a threshold $q$. The queue depth is aggregated from all the transceiver queues at a node in order to reflect the fact that turning off one transceiver shifts its load to the other (still active) transceivers. For instance, each individual transceiver queue may be below threshold q, but if their aggregated size tops q, MXRM may not be able to turn off any one of them. If the depth of the queue 350 is above the threshold for at least a predetermined time period, $Tq$, i.e., $D > q$, the node advertises for additional transceivers, A, wherein A is determined as follows:

$$A = Q+1,$$

where Q = p, such that $\left\lfloor \dfrac{D}{q^p} \right\rfloor = 1$ and $D = \sum_{x=0}^{X} d_x$ .

However, limitations in the frequency assignment protocol as discussed above with respect to Fig. 2 may leave the new transceivers 305 assigned to frequencies that are not in fact directly useful, leaving the sender with the same number of links to its destinations. MXRM handles this frequency assignment (FA) limitation by adding more transceivers when the queue depth keeps increasing and the ones already assigned are not enough. Therefore, the depth, $d,$ of the queues 350 may therefore be compared to higher thresholds, $q^2$ and $q^3$,

etc. where $Q = p$ such that $\left\lfloor \dfrac{D}{q^p} \right\rfloor = 1$. A node 300 sends their $A$ value to neighbors, who in turn assign a number of transceivers 305, $X,$ that is equal to the maximum number of requested transceivers 305 they receive, i.e., $max_i (A_i)$. While the transition to the loaded state is rapid, the reverse is much slower. A loaded transceiver reverts into unloaded state if its queue depth has been below the threshold $\theta_{Ql}^{p}$ for at least $T_{Q1}$. There are

multiple $\theta_{Ql}^{p}$ thresholds, which are a few queue slots above $q^{p-1}$.

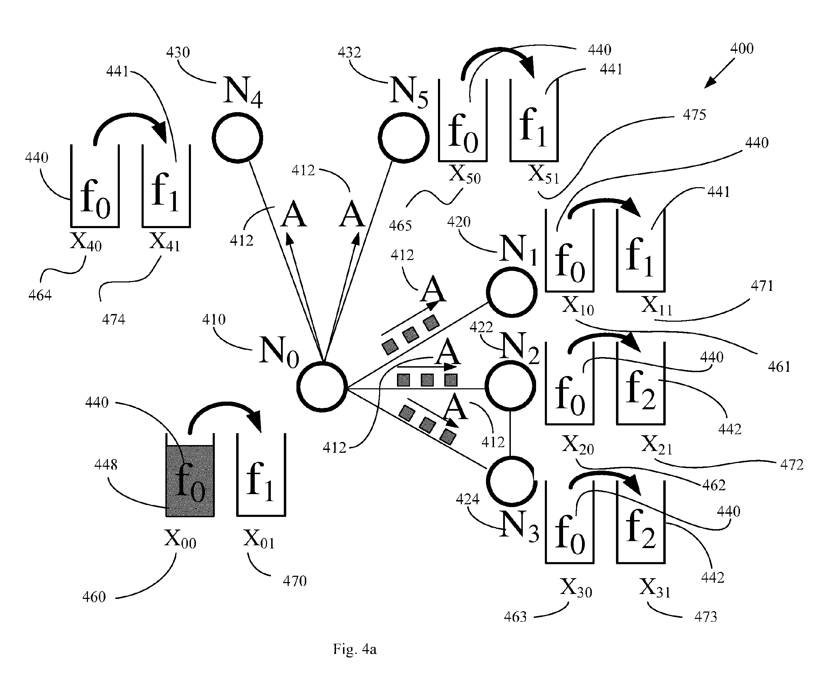

Figs. 4a illustrate a network of nodes 400 demonstrating the use of transceiver activation resulting in frequency lockout of target nodes according to an embodiment. In Fig. 4a, node $N_0$ 410 has five neighbors, $N_1$ 420 $N_2$ 422, $N_3$ 424, $N_4$ 430, $N_5$ 432. The neighboring nodes, $N_1$, 420 $N_2$ 422, $N_3$ 424 are also next-hops. Nodes $N_0$ 410, $N_1$ 420 $N_2$ 422, $N_3$ 424, $N_4$ 430, $N_5$ 432, start with one blanket channel assignment, $f_0$ 440. The five neighboring nodes, $N_1$ 420 $N_2$ 422, $N_3$ 424, $N_4$ 430, $N_5$ 432, have transceivers $X_{10}$ 461, $X_{20}$ 462, $X_{30}$ 463, $X_{40}$ 464, $X_{50}$ 465, respectively. However the load for node $N_0$ 410 increases, and the queue 448 of transceiver $X_{00}$ 460 fills up. Node $N_0$ 410 sends an advertisement A 412, e.g., A = 2, to nodes $N_1$ 420 $N_2$ 422, $N_3$ 424, $N_4$ 430, $N_5$ 432 to thereby request another transceiver be activated on at least one next-hop node. The target nodes $N_1$ 420 $N_2$ 422, $N_3$ 424, $N_4$ 430, $N_5$ 432, know to activate another transceiver, and upon seeing the A value 412 in packets coming from node $N_0$ 410, assign another transceiver $X_{01}$ 470, $X_{11}$ 471, $X_{21}$ 472, $X_{31}$ 473, $X_{41}$ 474, $X_{51}$ 475, respectively, so the nodes now have two transceivers. However, due to randomness of most frequency assignment protocols, transceiver $X_{11}$ 471 for node $N_1$ 420, transceiver $X_{31}$ for node $N_4$ 430, and transceiver $X_{51}$ for node $N_5$ 432 join tile $f_1$ 441 thereby locking nodes $N_2$ 422 and $N_3$ 424 out. Packets will continue going out on $f_0$ 440 to reach targets $N_1$ 420, $N_2$ 422 and $N_3$ 424.

For example, in Fig. 4a, node $N_0$ 410 activates a second transceiver using frequency $f_1$ 440. Nodes $N_4$

430, $N_5$ 432 and $N_1$ 420 activate a transceiver using frequency $f_1$ 440. However, nodes $N_2$ 422 and $N_3$ 424 are locked-out from using $f_1$ 440 and thus use $f_2$ 442. This type of frequency lock-out is an inherent side-effect of frequency assignment protocols to promote frequency re-use.

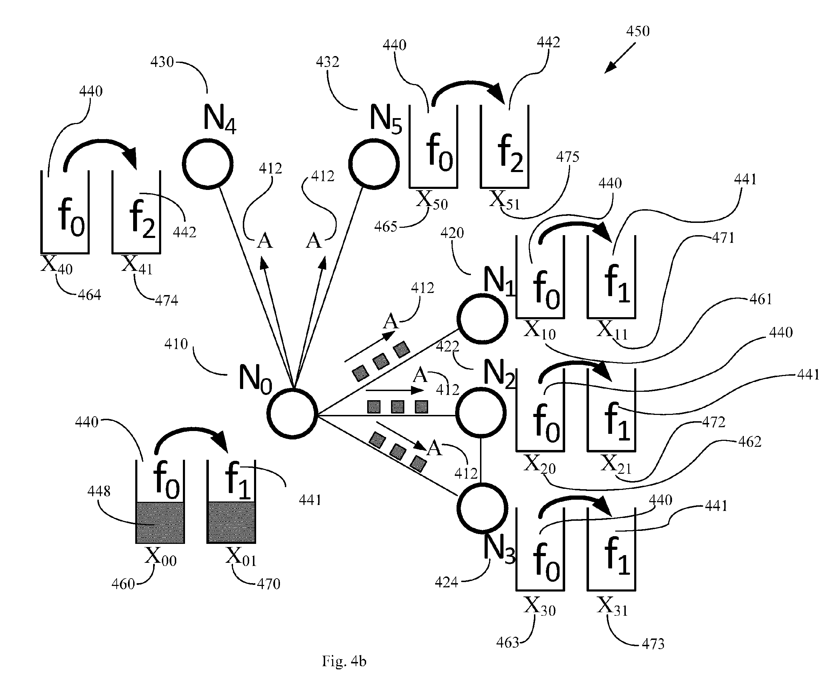

Figs. 4b illustrate a network of nodes 450 demonstrating the use of managed transceiver activation according to an embodiment to prevent frequency lockout of target nodes. In Fig. 4b, node $N_0$ 410 has five neighbors, $N_1$ 420 $N_2$ 422, $N_3$ 424, $N_4$ 430, $N_5$ 432. The neighboring nodes, $N_1$, 420 $N_2$ 422, $N_3$ 424 are also next-hops. Nodes $N_0$ 410, $N_1$ 420 $N_2$ 422, $N_3$ 424, $N_4$ 430, $N_5$ 432, start with one blanket channel assignment having transceivers $X_{00}$ 460, $X_{10}$ 461, $X_{20}$ 462, $X_{30}$ 463, $X_{40}$ 464, $X_{50}$ 465, respectively, that use frequency $f_0$ 440.

In Fig. 4b, the MXRM ensures that next-hop targets, node $N_1$ 420, node $N_2$ 422 and node $N_3$ 424, consider the advertisement A = 2 412. To help prevent non-next-hop neighbors from locking target neighbors out of frequencies used by the sender, MXRM ensures that nodes considers A values 412 only if they are a next-hop neighbor. The neighbors, $N_1$ 420, node $N_2$ 422 and node $N_3$ 424, that are also targets then assign new transceivers, i.e., transceiver $X_{11}$ 471 for node $N_1$ 420, transceiver $X_{21}$ for node $N_4$ 422, and transceiver $X_{31}$ for node $N_3$ 424. While this does not guarantee next-hop neighbors, $N_1$ 420, node $N_2$ 422 and node $N_3$ 424, will assign the same frequencies as the sender's, e.g., it depends on the frequency assignment protocol, this process does increase the probability of establishing links between destinations along a path. Each node keeps track of the last time it received a data packet from every one of its neighbors and discards A advertisements from neighbors that have not sent it a packet in over $T_{Hdata}$ of suggested value 10s. This lets nodes outside of the data path leave their transceivers turned off, allowing those forwarding the flow to capture more of the available frequencies.

Data packets must explicitly list next-hop targets in order for all neighbors to identify whether they are a destination of the data traffic. This is trivial for purely unicast and broadcast packets, which usually contain a next-hop field set to one address or the broadcast address respectively. However, multicast packets pose a scalability challenge: they may be destined for a large number of targets whose addresses may not fit in the data frame. MXRM uses aliases, e.g., an integer value given by every node to each neighbor. Aliases may be exchanged between neighbors such that node IDs are mapped to the range 0 to N, the number of neighbors seen by a node. Nodes originating data traffic translate their destinations' node IDs to aliases, which are included in the packet headers. Receiving nodes can recognize their alias with the source node and determine whether they are a next-hop target.

Fig. 4b illustrates that the MXRM ensures that only next-hop targets, $N_1$ 420, node $N_2$ 422 and node $N_3$ 424, consider the advertisement A 412, e.g., A = 2. Node $N_1$ 420, node $N_2$ 422 and node $N_3$ 424 thus form a group of nodes connected by the same frequencies $f_0$ 440 and $f_1$ 441. MXRM takes queue depth into consideration to compute A. For example, the depth of a queue, such as first queue 448 for transceiver $X_{00}$ 460 at node $N_0$ 410 may be quantified as the maximum number of packets in the MAC queues at any instant.

A node whose transceivers become loaded beyond a predetermined threshold may therefore assign additional transceivers through advertisements to accommodate the increased traffic load. Advertisements are placed inside Heartbeats and Hellos to ensure that transceivers are not kept active longer than needed. For example, node $N_0$ 410 may send data packets to a next-hop target node $N_1$ 420 and advertises its need for A = 2 transceivers, wherein node $N_1$ 420 assigns new transceiver $X_{11}$ 471 using frequency $f_1$ 441.

However, once $N_0$ 410 no longer needs two transceivers, but only needs one, and traffic to $N_1$ 420 stops, $N_1$ 420 could end-up keeping transceiver $X_{11}$ 471. Thus, Node $N_1$ 420 is notified of the new advertisement A = 1 even in the absence of data packets from $N_0$ 410. Accordingly, node $N_1$ 420 is notified it no longer needs the additional transceiver $X_{11}$ 471.

Thus, to accommodate former and current next-hop targets, the advertisement, A 412, is placed inside heartbeat and hello messages. The periodicity and broadcast nature of Heartbeats and Hellos make them perfectly suited to carry the advertisement. The advertisements are heeded when a neighbor receives data packets from the source node within a selected timeframe, THdata. The former next-hop target, e.g., node $N_1$ 420 therefore knows to wind down its transceivers $X_{11}$ 471.

Nevertheless, MXRM may create an unstable feedback loop that prevents some frequency assignment algorithms from converging. Affected FA algorithms do not preserve part or all of the previously assigned channels across commands to increase or decrease the number of transceivers. For example, a FA may wipe out its existing assignments when it receives an order to increase its number of transceivers and before it goes through its normal algorithm to assign transceivers. If a sender node requests more transceivers, the receivers oblige, leaving FA and MXRM to converge in one direction.

Yet, if a receiver node severs the only link it has to the sender (for instance it can no longer assign a full tile) during the next increase in transceivers, the short-path tree will change, forcing FA and MXRM to start converging in a different direction. This behavior may repeat causing FA and MXRM to never stabilize. Instead, FA must preserve most of its channel assignments across transceiver changes requested by MXRM. For Tiles, transceivers that assigned a full tile are allowed to keep it after a request from MXRM.

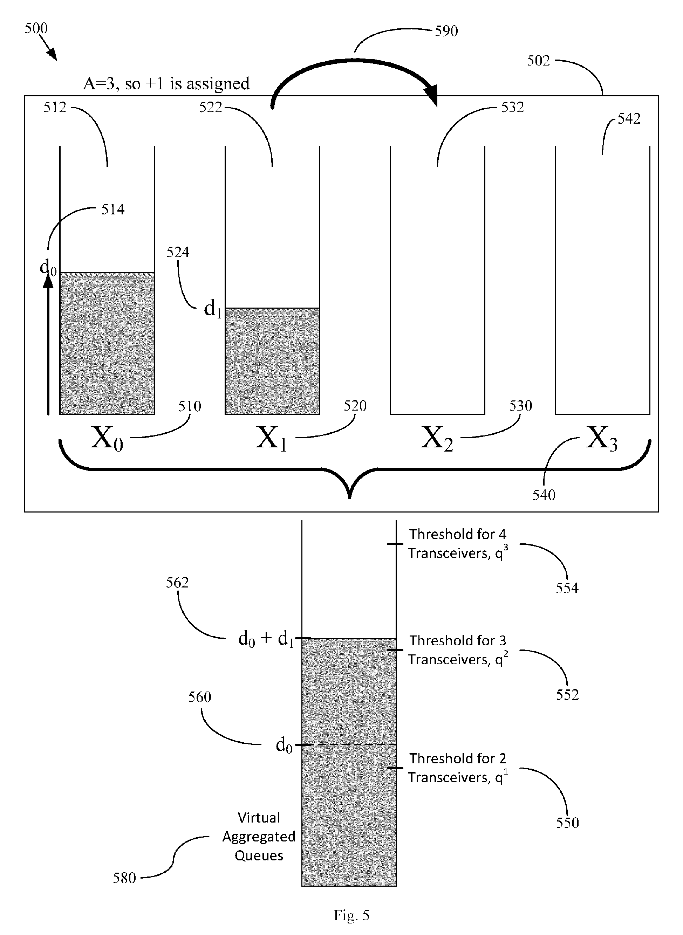

Fig. 5 illustrates the use of an advertisement for requesting activation of additional transceivers 500 according to an embodiment. In Fig. 5, a node 502 is shown having four transceivers, $X_0$ 510, $X_1$ 520, $X_2$ 530, $X_3$ 540, that may be activated. In Fig. 5, two transceivers, $X_0$ 510, $X_1$ 520 are activated, wherein a first buffer 512 is shown for transceiver 510, $X_0$, and a second queue 522 is shown for transceiver 520, $X_1$. Both queues 512, 522 have data therein. The first queue 512 for transceiver 510, $X_0$, is filled to line do 514. The second queue 522 for transceiver 520, $X_1$, is filled to line $d_1$ 524.

Referring to the virtual aggregated queue D 580, which represents the combined depth for all of the queues 512, 522, 532, 542 of node 502. Markers are shown showing three thresholds, i.e., a threshold indicating a need for 2 transceivers 550, a threshold indicating a need for 3 transceivers 552, and a threshold indicating a need for 4 transceivers 554. In addition, a first marker 560 is provided to show the level for the first queue 512 of transceiver 510, $X_0$, and a second marker 562 is provided to represent the combined depth for the first queue 512 of transceiver 510, $X_0$, and the second queue 522 of transceiver 520, $X_1$, i.e., do + $d_1$. The combined depth 562 of queues 512, 522 is greater than the threshold for 3 transceivers 552. Since only two transceivers, transceiver 510, $X_0$ and transceiver 520, $X_1$, a third transceiver 530, $X_2$ is needed.

Thus, a number of transceivers to be added, A 570, is computed by the sender node according to:

$$A = Q+1$$

where Q = p, such that $\left\lfloor \dfrac{D}{q^p} \right\rfloor = 1$ and $D = \sum_{x=0}^{X} d_x$ .

In the equations above, Q approximates the number of transceivers having a queue greater than a predetermined threshold. $\left\lfloor \dfrac{D}{q^p} \right\rfloor = 1$ for p = 2 = Q.

Therefore, it follows that A = 2+1 = 3. Thus, the virtual aggregated queues 580 indicate that 3 transceivers are needed. For example, in Fig. 5, the number of combined queue depth 562 is greater than the threshold indicating a need for 3 transceivers 552. Thus, three transceivers are needed and an advertisement 590 for an additional transceiver, i.e., transceiver 530, $X_2$.

The sender node 502 shares the number of transceivers needed, A 590, with neighboring nodes, e.g., next-hop nodes. The number of transceivers needed, A 590, is sent to neighboring nodes in a packet header. So, the value of A that is advertised is 3, which means that an additional transceiver, $X_2$ 530 is needed. Accordingly, the MXRM determines a number of transceivers having a queue with a load greater than a predetermined depth.

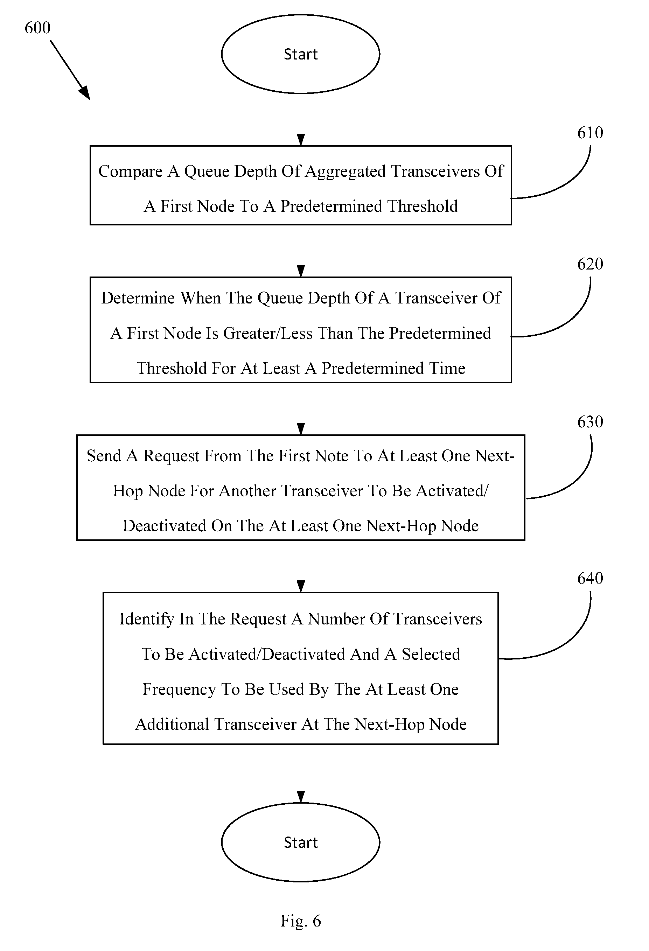

Fig. 6 is a flowchart of a method for managing transceiver resources 600 according to an embodiment. A queue depth of a transceiver of a first node is compared to a predetermined threshold 610. When the queue depth of a transceiver of a first node is greater than the predetermined threshold for at least a predetermined time is determined 620. A request is sent from the first node to at least one next-hop node for another transceiver to be activated on the at least one next-hop node 630. The request identifies a number of transceivers to be activated and a selected frequency to be used by the at least one additional transceiver at the next-hop node 640.

The above detailed description includes references to the accompanying drawings, which form a part of the detailed description. The drawings show, by way of illustration, specific embodiments that may be practiced. These embodiments are also referred to herein as "examples." Such examples can include elements in addition to those shown or described. However, the present inventors also contemplate examples in which those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are therefore not necessarily meant to indicate order in a series, list or sequence.

The above description is intended to be illustrative, and not restrictive. For example, the above-described examples (or one or more aspects thereof) may be used in combination. Other embodiments can be used, such as by one of ordinary skill in the art upon reviewing the above description. The Abstract is to allow the reader to quickly ascertain the nature of the technical disclosure, for example, to comply with 37 C.F.R. § 1.72(b). It is submitted with the understanding that it will not be used to interpret or limit the scope or meaning of the claims. Also, in the above Detailed Description, various features may be grouped together to streamline the disclosure. An unclaimed disclosed feature may not be used by any claim. Rather, inventive subject matter may lie in fewer than the features of a particular disclosed embodiment. Thus, the following claims are hereby incorporated into the Detailed Description, wherein a claim stands on its own as a separate embodiment. The scope of the embodiments is to be determined with reference to the appended claims, along with the full scope of equivalents to which such claims are entitled.

**Claims**

1. A method for allocating interfaces, transceivers and transceiver resources for nodes in a network, comprising:

   comparing a queue depth of a transceiver of a sending node to a predetermined threshold;
   determining when the queue depth of the transceiver of the sending node is greater than a predetermined threshold for at least a predetermined time; and
   in response to determining that the queue depth of the transceiver of the sending node is greater than a predetermined threshold for at least a predetermined time, sending, by the sending node, a request for at least one additional transceiver to be activated on at least one next-hop node.

2. The method of claim 1 further comprising:

   determining when the queue depth of the transceiver of the sending node is lower than a predetermined threshold for at least a predetermined time;
   in response to determining that the queue depth of the transceiver of the sending node is lower than a predetermined threshold for at least a predetermined time, sending, by the sending node, a request for at least one additional transceiver to be deactivated on at least one next-hop node.

3. The method of claim 1 or claim 2, wherein the determining when the queue depth of the transceiver of the sending node is greater than the predetermined threshold for at least the predetermined time further comprises determining a largest integer less than or equal to a ratio of the queue depth to the predetermined threshold.

4. The method of any preceding claim, wherein the sending the request further comprises identifying a number of transceivers to be activated and sending an advertisement to the at least one next-hop node requesting activation of the identified number of transceivers.

5. The method of claim 4, wherein the identifying the number of transceivers to be activated further comprises identifying a number of transceivers equal to one plus an estimated number of transceivers in use, wherein estimated number of transceivers in use is a function of the sum of the queue depths and predetermined queue thresholds such that the estimate is the lower threshold nearest to the summed queue depth.

6. The method of any preceding claim, wherein the sending the request further comprises identifying a number of transceivers to be deactivated and sending an advertisement to the at least one next-hop node requesting deactivation of the identified number of transceivers.

7. A node in a network, comprising:

   at least one transceiver to transmit and receive packets in a network of nodes;
   memory, coupled to the at least one transceiver, to provide at least one queue for storing packets for the at least one transceiver; and
   a processor, coupled to the memory and the at least one transceiver, wherein the processor is arranged to implement a transceiver resource manager, the transceiver resource manager arranged to analyze a depth of the at least one queue and to transmit an advertisement to a next-hop node in the network requesting the next-hop node adjust a number of transceiver used by the next-hop node based on the analyzed depth of the at least one queue to adapt a capacity of the next-hop node to a traffic load represented by the depth of the analyzed at least one queue.

8. The node of claim 7, wherein the advertisement requesting the next-hop node adjust a number of transceiver used by the next-hop node further includes a request for the at least one additional transceiver at the next-hop node.

9. The node of claim 7 or claim 8, wherein the processor is arranged to allow only a targeted next-hop node to add at least one additional transceiver based on the analyzed depth of the at least one queue.

10. The node of any one of claims 7 to 9, wherein the transceiver resource manager notifies the next-hop node that the transceiver added to the next-hop node is no longer used.

11. The node of any one of claims 7 to 10, wherein the advertisement sent to the next-hop node to add at least one additional transceiver is provided inside a packet sent form the transceiver resource manager to the next-hop node.

**12.** The node of any one of claims 7 to 11, wherein the advertisement transmitted to the next-hop node requesting the next-hop node add at least one additional transceiver in response to the analyzed depth of the at least one queue is based on the transceiver resource manager determining a number of transceivers having a queue with a queue depth greater than a predetermined threshold plus a selected value.

**13.** The node of any one of claims 7 to 12, wherein the identifying the number of transceivers to be activated further comprises identifying a number of transceivers equal to one plus an estimated number of transceivers in use, wherein the estimated number of transceivers in use is a function of the sum of the queue depths and predetermined queue thresholds such that the estimate is the lower threshold nearest to the summed queue depth.

**14.** A system comprising means to perform a method as claimed in any of preceding claims 1-6.

**15.** At least one machine readable medium including instructions that, when executed, implement a method or realize an apparatus as claimed in any of preceding claims 1-6.

Fig. 1

Fig. 2

300

342    Network

340

Cell

Transceivers

315    Memory

Interface

320

Queues

350

305

310

Processing Unit

Multi-Transceiver
Resource Manager
(MXRM)

325

312

Fig. 3

Fig. 4a

Fig. 4b

A=3, so +1 is assigned

$X_0$  $X_1$  $X_2$  $X_3$

$d_0$

$d_1$

Threshold for 4 Transceivers, $q^3$

$d_0 + d_1$

Threshold for 3 Transceivers, $q^2$

$d_0$

Threshold for 2 Transceivers, $q^1$

Virtual Aggregated Queues

Fig. 5

600

**Start**

Compare A Queue Depth Of Aggregated Transceivers Of A First Node To A Predetermined Threshold

610

Determine When The Queue Depth Of A Transceiver Of A First Node Is Greater/Less Than The Predetermined Threshold For At Least A Predetermined Time

620

Send A Request From The First Note To At Least One Next-Hop Node For Another Transceiver To Be Activated/ Deactivated On The At Least One Next-Hop Node

630

Identify In The Request A Number Of Transceivers To Be Activated/Deactivated And A Selected Frequency To Be Used By The At Least One Additional Transceiver At The Next-Hop Node

640

**Start**

Fig. 6

Europäisches
Patentamt

European
Patent Office

Office européen
des brevets

**EUROPEAN SEARCH REPORT**

Application Number

EP 14 15 8384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/021197 A1 (FOORE LAWRENCE R [US] ET AL) 13 September 2001 (2001-09-13) <br> * abstract * <br> * paragraph [0009] - paragraph [0015] * <br> * paragraph [0029] - paragraph [0030] * <br> * paragraph [0034] * <br> * paragraph [0039] - paragraph [0044] * <br> * paragraph [0048] - paragraph [0063] * <br> * claims 1-2, 13-14 * <br> * figures 1-7 * | 1-15 | INV. <br> H04L12/801 <br> H04L12/835 |
| A | EP 1 303 162 A2 (ALCATEL CANADA INC [CA]) 16 April 2003 (2003-04-16) <br> * abstract * <br> * paragraph [0001] - paragraph [0014] * <br> * paragraph [0017] - paragraph [0021] * <br> * claims 1, 13 * <br> * figures 4, 6 * | 1-15 | |
| A | US 2013/051441 A1 (CHO JAMES S [US] ET AL) 28 February 2013 (2013-02-28) <br> * abstract * <br> * paragraph [0001] - paragraph [0025] * <br> * paragraph [0053] - paragraph [0059] * <br> * paragraph [0065] - paragraph [0101] * <br> * claims 1-23 * <br> * figures 1, 3A, 5A-6B * | 1-15 | TECHNICAL FIELDS SEARCHED (IPC) <br><br> H04L |

The present search report has been drawn up for all claims

| Place of search | Date of completion of the search | Examiner |
|---|---|---|
| Munich | 21 May 2014 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 8384

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2014

| Patent document cited in search report | | | Publication date | Patent family member(s) | | | Publication date |
|---|---|---|---|---|---|---|---|
| US 2001021197 | A1 | | 13-09-2001 | BR | 0207255 | A | 10-02-2004 |
| | | | | CA | 2435695 | A1 | 08-08-2002 |
| | | | | CN | 1489842 | A | 14-04-2004 |
| | | | | CN | 101511128 | A | 19-08-2009 |
| | | | | EP | 1356618 | A1 | 29-10-2003 |
| | | | | EP | 2259649 | A1 | 08-12-2010 |
| | | | | HK | 1062238 | A1 | 23-10-2009 |
| | | | | IL | 156935 | A | 20-07-2009 |
| | | | | IL | 195538 | A | 30-11-2010 |
| | | | | IL | 205827 | A | 31-12-2012 |
| | | | | IL | 207057 | A | 31-08-2011 |
| | | | | JP | 4017154 | B2 | 05-12-2007 |
| | | | | JP | 5113217 | B2 | 09-01-2013 |
| | | | | JP | 5167455 | B2 | 21-03-2013 |
| | | | | JP | 2004529529 | A | 24-09-2004 |
| | | | | JP | 2007251966 | A | 27-09-2007 |
| | | | | JP | 2010011472 | A | 14-01-2010 |
| | | | | JP | 2010259077 | A | 11-11-2010 |
| | | | | JP | 2013031194 | A | 07-02-2013 |
| | | | | KR | 20030071823 | A | 06-09-2003 |
| | | | | MX | PA03006815 | A | 13-11-2003 |
| | | | | NO | 20033238 | A | 30-09-2003 |
| | | | | US | 2001021197 | A1 | 13-09-2001 |
| | | | | US | 2003152095 | A1 | 14-08-2003 |
| | | | | US | 2004179497 | A1 | 16-09-2004 |
| | | | | US | 2004180696 | A1 | 16-09-2004 |
| | | | | US | 2013182682 | A1 | 18-07-2013 |
| | | | | WO | 02061993 | A1 | 08-08-2002 |
| EP 1303162 | A2 | | 16-04-2003 | EP | 1303162 | A2 | 16-04-2003 |
| | | | | US | 2003095562 | A1 | 22-05-2003 |
| US 2013051441 | A1 | | 28-02-2013 | CN | 103782630 | A | 07-05-2014 |
| | | | | US | 2013051441 | A1 | 28-02-2013 |
| | | | | WO | 2013032498 | A1 | 07-03-2013 |

EPO FORM P0459

For more details about this annex : see Official Journal of the European Patent Office, No. 12/82